# EUROPÄISCHE PATENTSCHRIFT

(11) **EP 0 950 479 B1**
(45) Veröffentlichungstag und Bekanntmachung des Hinweises auf die Patenterteilung: **17.07.2002**
(21) Anmeldenummer: 99107523.5
(22) Anmeldetag: 15.04.1999
(51) Int. Cl.: B25J 19/00

(54) **Roboter**
Robot
Robot

(30) Priorität: 17.04.1998 DE 19816949
(43) Veröffentlichungstag der Anmeldung: 20.10.1999
(73) Patentinhaber: KUKA Roboter GmbH, 86165 Augsburg (DE)
(72) Erfinder: Thomas Finsterwalder, 86179 Augsburg (DE); Peter Unglert, 86169 Augsburg (DE)
(74) Vertreter: Lempert, Jost, Dipl.-Phys. Dr. rer.nat.

(56) Entgegenhaltungen:
- JP-A- 9 141 590

## Beschreibung

Die Erfindung betrifft einen Roboter mit einem Sockel und einer auf diesem befindlichen Karussellplatte mit einer Öffnung zur Durchführung von Kabeln.

Bei Robotern erfolgt die Energieversorgung der Antriebe für die einzelnen beweglichen Arme des Roboters sowie die Roboterhand einerseits und gegebenenfalls die Leistungsversorgung eines Werkzeugs, wie einer Schweißzange, andererseits über den stationären Sockel des Roboters, aus dem Kabel entweder an der Außenseite des Karussells und der Arme des Roboters oder aber durch diese zu den entsprechenden Nutzungsstellen geführt sind. Das Herausführen des Kabels aus dem Sockel erfolgt durch einen allseitig geschlossenen Durchbruch in der Karussellplatte. Bei der Verkabelung müssen daher die Kabel, die eine beträchtliche Länge und als Kabelbündel eine entsprechende Dicke und ein Gewicht aufweisen, von unten durch den Durchbruch nach außen geführt werden (siehe zum Beispiel JP-A-09141590). Dies ist aufwendig. Darüber hinaus muß der Durchbruch eine beträchtliche Größe aufweisen, damit auch Stecker und an den Kabeln vorgesehene Verbindungsteile durch die Öffnung mit hindurchgeführt werden können.

Der Erfindung liegt daher die Aufgabe zugrunde, die Montage des Roboters und insbesondere die Verkabelung zu vereinfachen sowie insbesondere auch bei installiertem Roboter eine einfache Erweiterung der Kabelinstallation zu ermöglichen.

Erfindungsgemäß wird die genannte Aufgabe bei einem Roboter der eingangs genannten Art dadurch gelöst, daß die Öffnung als sich vom Umfangsrand der Karussellplatte nach innen erstreckender Schlitz ausgebildet ist.

Durch die erfindungsgemäße Lösung, die Öffnung in der Karussellplatte nicht als allseitig geschlossene Öffnung auszubilden, sondern als vom Randbereich her verlaufenden und damit zum Randbereich hin offenen Schlitz, wird es möglich, daß die Kabel nicht mehr längs durch die Öffnung hindurchgeführt werden müssen, sondern seitlich in den Schlitz eingelegt werden können. Hierdurch wird die Montage, insbesondere die Verkabelung wesentlich vereinfacht und ist damit schneller durchzuführen, als dies bisher der Fall war. Durch die erfindungsgemäße Lösung wird eine Entkopplung der Montage der mechanischen Komponenten und der Verkabelung erreicht. Darüber hinaus ist eine einfache Erweiterung der elektrischen Installation beim montierten Karussell möglich. Während der Schlitz grundsätzlich schräg zum Radius der Karussellplatte verlaufen könnte, sieht eine bevorzugte Ausgestaltung vor, daß der Schlitz vom Rand der Karussellplatte im wesentlichen radial nach innen verläuft. In Weiterbildung kann dabei vorgesehen sein, daß der Schlitz L-förmig mit zueinander im wesentlichen senkrechten Abschnitten ausgebildet ist.

Eine bevorzugte Ausgestaltung sieht eine den Randbereich des Schlitzes abdeckende, am Rand der Karussellplatte abnehmbar festlegbare Abdeckplatte vor, wobei insbesondere die Abdeckplatte als Winkelblech ausgebildet ist. Hierdurch wird ein außenseitiger Abschluß des an sich zum Randbereich der Karussellplatte hin offenen Schlitzes ermöglicht, wodurch eine mechanische Beschädigung, z.B. durch Schweißspritzer, der Kabel im Betrieb verhindert wird.

Weitere Vorteile und Merkmale der Erfindung ergeben sich aus den Ansprüchen und aus der nachfolgenden Beschreibung, in der ein Ausführungsbeispiel unter Bezugnahme auf die Zeichnung im einzelnen erläutert ist. Dabei zeigt:
- Fig. 1: eine Draufsicht auf die unteren Teile eines Roboters mit zwei Kabeln vor Einlegen in den Sockel und nach erfolgtem Einlegen und
- Fig. 2: eine Seitenansicht entsprechend II-II auf Karussellplatte und eingelegte Kabel.

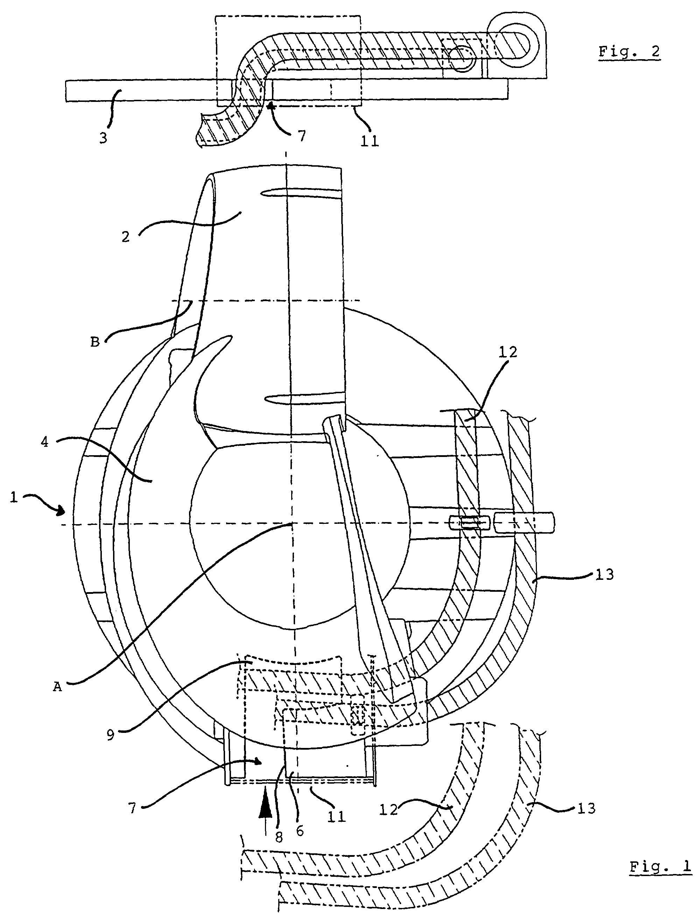

Die Fig. 1 stellt eine Draufsicht auf den unteren Bereich eines Roboters, genauer auf das um die erste vertikale Achse A drehbare Karussell 1 eines Roboters dar. Der Antriebsmotor für diese Bewegung um die Achse A kann konzentrisch zu dieser angeordnet sein. Am Karussell 1 findet sich ein Ansatz 2, an dem ein erster, um die zweite Achse B, die horizontal ausgerichtet ist, verschwenkbarer Arm angelenkt ist, der selbst nicht dargestellt ist. Der Motor zum Verschwenken dieses Armes sitzt in der Regel konzentrisch zur Achse B.

Das Karussell 1 weist an seinem unteren Ende eine Karussellplatte 3 auf, mit der es auf einem stationären Sockel oder Fuß des Roboters gelagert ist und die in der Darstellung der Fig. 1 durch die Tragstruktur 4 des Karussells 1 überdeckt ist.

Die Karussellplatte 3 weist im dargestellten Ausführungsbeispiel an ihrer der Achse B abgewandten Seite einen von ihrem Rand 6 nach innen verlaufenden Schlitz 7 auf, der zunächst mit einem Radialabschnitt 8 radial nach innen verläuft, welcher an seinem inneren Ende durch einen Tangentialabschnitt 9 L-förmig abgewinkelt ist. Der Schlitz 7 ist in seinem radial außen liegenden Bereich durch eine Abdeckplatte 11, die vorzugsweise als Winkelblech ausgebildet ist, verschließbar. Die Abdeckplatte 11 kann an der Karussellplatte 3 mittels Schrauben lösbar befestigt werden.

Durch diese Ausgestaltung kann die Verkabelung des Roboters durch Einlegen eines Kabels 12 für die weiteren, an den Armen des Roboters befindlichen Motoren und ggf. eines Leistungskabels 13 für beispielsweise eine Schweißzwange, die nach Montage vom Inneren des Sockels des Roboters unterhalb der Karussellplatte 3 nach außen zu einem Arm des Roboters verlaufen, derart erfolgen, daß die Kabel 12, 13 seitlich von der Außenseite der Karussellplatte 3 in den Schlitz 7 eingelegt werden, bis sie in den tangential verlaufenden Bereich 9 des Schlitzes gelangen. Hierdurch wird ein mühsames Einfädeln durch ein allseits geschlossenes Loch der Karussellplatte, wie dies beim Stand der Technik der Fall ist, vermieden. Anschließend kann der äußere Bereich 8 des Schlitzes 7 durch die Abdeckplatte 11 verschlossen werden, indem diese an der Karussellplatte 3 angeschraubt wird.

Hierdurch ist ein einfaches und bequemes Einlegen der Kabel 12, 13 möglich.

## Patentansprüche

1. Roboter mit einem Sockel und einer auf diesem befindlichen Karussellplatte mit einer Öffnung zur Durchführung von Kabeln, **dadurch gekennzeichnet, daß** die Öffnung als sich vom Umfangsrand der Karussellplatte (3) nach innen erstreckender Schlitz (7, 8, 9) ausgebildet ist.

2. Roboter nach Anspruch 1, **dadurch gekennzeichnet, daß** der Schlitz vom Rand der Karussellplatte (3) im wesentlichen radial nach innen verläuft.

3. Roboter nach Anspruch 1 oder 2, **dadurch gekennzeichnet, daß** der Schlitz (7) L-förmig mit zueinander im wesentlichen senkrechten Abschnitten (8, 9) ausgebildet ist.

4. Roboter nach einem der vorangehenden Ansprüche, **gekennzeichnet durch** eine den Randbereich des Schlitzes (7) abdeckende, am Rand der Karussellplatte abnehmbar festlegbare Abdeckplatte (11).

5. Roboter nach einem der vorangehenden Ansprüche, **dadurch gekennzeichnet, daß** die Abdeckplatte (11) als Winkelblech ausgebildet ist.

## Claims

1. Robot with a base and a carrousel plate located on the latter having an opening for the passage of cables, **characterized in that** the opening is constructed as a slot (7, 8, 9) extending inwards from the circumferential edge of the carrousel plate (3).

2. Robot according to claim 1, **characterized in that** the slot passes substantially radially inwards from the edge of the carrousel plate (3).

3. Robot according to claim 1 or 2, **characterized in that** the slot (7) has a L-shaped construction with portions (8, 9) substantially perpendicular to one another.

4. Robot according to one of the preceding claims, **characterized by** a cover plate (11) removably securable to the edge of the carrousel plate and covering the marginal area of the slot (7).

5. Robot according to one of the preceding claims, **characterized in that** the cover plate (11) is constructed as an angle plate.

## Revendications

1. Robot comprenant un socle portant un plateau de carrousel présentant une ouverture pour le passage de câbles, **caractérisé en ce que** l'ouverture est conformée en fente (7,8,9) s'étendant du bord périphérique du plateau horizontal (3) vers l'intérieur.

2. Robot selon la revendication 1, **caractérisé en ce que** la fente s'étend sensiblement radialement du bord du plateau de carrousel (3) vers l'intérieur.

3. Robot selon la revendication 1 ou 2, **caractérisé en ce que** la fente (7) affecte une forme en L dont les segments (8,9) sont sensiblement perpendiculaires l'un à l'autre.

4. Robot selon l'une quelconque des revendications précédentes, **caractérisé par** une plaque amovible de couverture (11) couvrant la zone de bordure de la fente (7) pouvant être fixée au bord du plateau de carrousel.

5. Robot selon l'une quelconque des revendications précédentes, **caractérisé en ce que** la plaque de couverture (11) est réalisée en cornière de tôle.
